# EUROPEAN PATENT APPLICATION

(11) **EP 2 750 341 A1**
(43) Date of publication of application: **02.07.2014**
(21) Application number: 13198890.9
(22) Date of filing: 20.12.2013
(51) Int. Cl.: H04L 12/715, H04L 12/24, H04L 12/723, H04Q 11/00

(54) **Communication system, communication path establishing method and management server**

(30) Priority: 28.12.2012 JP 2012286631
(71) Applicant: Hitachi, Ltd., Tokyo 100-8280 (JP)
(72) Inventor: Mashimo, Daisuke, Tokyo, 100-8280 (JP); Takahashi, Kiyotaka, Tokyo, 100-8280 (JP); Shibata, Takeshi, Tokyo, 100-8280 (JP); Ashi, Yoshihiro, Tokyo, 100-8280 (JP)
(74) Representative: MERH-IP Matias Erny Reichl Hoffmann

(57) **Abstract**

In interworking systems that utilize IP/MPLS protocol processing to operate a centralized control server within a MPLS-TP network as a pseudo-router unit; a system improves the utilization rate of the MPLS-TP network by establishing default paths beforehand as a precondition to coupling between MPLS-TP network edge devices and mapping a plurality of IP/MPLS paths between the same edge devices to the common default paths when mapping to provide IP/MPLS network connectivity.

## Description

### CLAIM OF PRIORITY

The present application claims priority from Japanese application JP 2012-286631 filed on, December 28,2012, the content of which is hereby incorporated by reference into this application.

### BACKGROUND

The present invention relates to a transmission system, and in particular to a system for coupling to a communication network to form communication paths by autonomous distributed control in order to send and receive data by way of a transmission network utilizing centralized control to establish communication paths.

Telecommunications carriers often provide services to the user over networks utilizing devices forming communication paths by autonomous distributed control. For example, IP/MPLS (Internet Protocol/Multi-Protocol Label Switching) routers are communication devices based on MPLS technology that are utilized in particular in core networks of telecommunications carriers. Each IP/MPLS node includes both a C plane (Control plane) as a function for controlling network paths, and a D plane (Data plane) as a function for transferring data, and is featured in being capable of dynamically setting up logical paths (referred to simply as "paths" in these specification) indicating communication paths under autonomous distributed control, conforming to paths determined by IP (Internet Protocol) routing. The IP/MPLS router contains a function to couple the stored IP service with the established paths. The IP/MPLS router can in this way flexibly provide End-to-End connectivity according to the stored IP service.

On the other hand, increasing demands for higher network efficiency and reliability have in some case led to transmission networks utilizing transmission devices that form communication paths by centralized control. For example, MPLS-TP (Multi-Protocol Label Switching-Transport Profile) is a transmission technology based on MPLS technology the same as IP/MPLS. Each node MPLS-TP node includes a D plane for user data flow, but does not include a C plane for controlling paths for user data flow. Namely a feature of this transmission technology is that the C plane and D plane are isolated and that paths are established by centralized control. Therefore, compared to IP/MPLS, MPLS-TP is capable of configuring a network that transfers packets with high efficiency by taking into account overall network traffic characteristics. Moreover, MPLS-TP is fully equipped with high reliability functions such as OAM (Operation Administration Maintenance) function or APS (Automatic Protection Switching) functions serving as a network infrastructure for storing network services. Since these types of advantages are available, the use of both networks in interworking technology or namely using MPLS-TP networks to couple IP/MPLS networks together in order to achieve high speed in IP services provided by IP/MPLS is being discussed by standards organizations, etc.

Achieving End-to-End connectivity interworking systems using MPLS-TP networks and IP/MPLS networks requires mapping to link both paths together. R. Martinotti, et al., "Interworking between MPLS-TP and IP/MPLS", draft-martinotti-mpls-tp-interworking-02, Internet-Draft, IETF, 2011 describes two types of path mapping systems respectively called the overlay model and peer model.

In the overlay model, the MPLS-TP network transparently couples between the IP/MPLS networks. In the edge device for the MPLS-TP network, the paths for the MPLS-TP network are mapped relative to VLAN (Virtual Location Area Network) tags attached to the packets in the IP/MPLS network or the physical IF (Interface) of the coupled edge devices. The plural coupled IP/MPLS network paths are therefore mapped as a single MPLS-TP path.

Unlike the overlay model on the other hand, in the peer model the IP/MPLS network and the MPLS/TP networks are coupled on the same layer (MPLS path). Within the MPLS-TP network, the MPLS-TP path, and the IP/MPLS paths formed as needed are mapped in a 1-to-1 relationship.

### SUMMARY

In the overlay model in R. Martinotti, et al., "Interworking between MPLS-TP and IP/MPLS", draft-martinotti-mpls-tp-interworking-02, Internet-Draft, IETF, 2011, each edge router in the IP/MPLS network recognizes that adjacent routers are mutually coupled without being aware of the MPLS-TP network. Therefore, when the system scale expands, there is a sudden increase in routing information that must be managed in each edge router so implementing large-scales systems with this overlay model is difficult.

In the peer model described in R. Martinotti, et al., "Interworking between MPLS-TP and IP/MPLS", draft-martinotti-mpls-tp-interworking-02, Internet-Draft, IETF, 2011, the IP/MPLS paths and MPLS-TP paths are mapped in a 1-to-1 relationship so that even if a paths were routed between edge devices in the same MPLS-TP network, each individual MPLS-TP path having a regular bandwidth had to be mapped relative to all of the IP/MPLS paths. Due to this necessity, the amount of unused bandwidth increased, consequently resulting in' a drop in the MPLS-TP network utilization rate.

Whereupon in view of the aforementioned problems, the present invention has the object of providing a mapping model ideal for mapping paths in large-scale systems and ideal for mapping paths achieving a transmission network having a high bandwidth utilization rate; in interworking systems utilizing a transmission network (such as MPLS/TP networks) of paths organized by centralized control; to connect between communication networks (such as IP/MPLS networks) having communication paths structured by autonomous distributed control.

To achieve the aforementioned objects, one aspect of the present invention provides a communication system comprised of a plurality of transmission devices configuring a transmission network conforming to a first communication protocol and coupled to a communication device configuring a communication network conforming to a second protocol, and a management server coupled to the transmission devices. The management server in the relevant communication system is configured from a first path information relating to a first communication path serving as a communication path between each of the preset transmission devices; and a path setter unit to select a corresponding first communication path based on the first path information; according to transmission devices comprising the transmission network passing along a second transmission path that is established by way of a transmission network serving as each of the start points and end points in either or both of two communication devices; and a transmit unit to transmit information relating to a first communication path selected by the path setter unit to the transmission device; and the transmission device in the communication system includes a send-receive unit to receive information relating to the first communication path, and a transfer processing unit to execute transfer processing of information received from the communication device based on the received information relating to the first communication path.

More preferably, the path setter unit maps (links) the common first communication path to the plurality of second communication paths passing along the common transmission devices, based on the first path information.

Even more preferably, the send-receive unit includes a transmit unit to transfer control packets for setting up a communication path protocol in order to establish a second communication path that the transmission device received from the communication device; and the path setter unit decides based on the control packet if the second communication path passes along the transmission device, and links the first communication path to the second communication path based on the decision results and the first path information.

Another aspect of the present invention provides a communication path establishing method that sets up a communication path between communication devices configuring the protocol, by way of a transmission network comprised of plural transmission devices and in conformance to a first communication protocol. The communication path establishing method sets a first communication path serving as the communication path between each of edge devices coupled to communication devices among the transmission device, and selects a first communication path according to edge devices that a second transmission path passes through, corresponding to the second transmission path established by two communication devices serving as each of the start points and end points by way of a transmission network, and sets up the second communication path by way of the selected first communication path.

More preferably, the communication path establishing method links the common first communication path, to the plurality of second communication paths passing along the common edge devices.

Further, another aspect of the present invention provides a management server coupled to plural transmission devices and configuring a transmission network conforming to a first communication protocol, and coupled to communication devices configuring a communication network conforming to a second communication protocol. The management server is comprised of first path information relating to a first communication path serving as the communication path between each of the preset transmission devices; and a path setter unit to select a first communication path corresponding to a second transmission path established by two communication devices serving as each of the start points and end points by way of a transmission network, based on the first path information, according to a transmission device configuring the transmission networks through which a second transmission path passes; and a transmit unit to transmit information relating to a first communication path selected by the path setter unit to the transmission device.

The present invention is capable of achieving a system having an excellent utilization rate and scalability in a transmission system for interworking with communication networks. The present invention is also simultaneously capable of achieving a transmission system that provides a communication service ensuring excellent guaranteed bandwidth.

### BRIEF DESCRIPTION OF THE DRAWINGS

Fig. 1 is a concept diagram showing the system for applying the present invention;
Fig. 2 is a block diagram showing the structure of the transmission device of the first embodiment;
Fig. 3 is a block diagram showing the structure of the centralized control server of the first embodiment;
Fig. 4 is a drawing showing the routing information table structure;
Fig. 5 is a drawing showing a link information table structure;
Fig. 6 is a drawing showing the MPLS-TP network path information table structure;
Fig. 7 is a drawing showing the mapping information table structure;
Fig. 8 is a drawing showing the MPLS-TP label information table structure;
Fig. 9 is a drawing showing the IP/MPLS label information table structure;
Fig. 10 is a block diagram showing the structure of the system of the first embodiment;
Fig. 11 is a diagram showing the operation sequence in the first embodiment;
Fig. 12 is a diagram showing the operation sequence in the

### second embodiment; and

Fig. 13 is a drawing showing the data packet structure in the MPLS-TP network of the present invention.

### DETAILED DESCRIPTION

The embodiments of the present invention are described by an example for the case where the MPLS-TP network is utilized as the transmission network, however other networks utilizing a protocol for establishing communication paths by centralized control may also be used and the same effect obtained even if another network is utilized. An example of the case where utilizing an IP/MPLS network as the communication network is described but other networks utilizing a protocol for establishing communication paths by centralized control may also be used and the same effect obtained even if using another network is utilized.

### First Embodiment

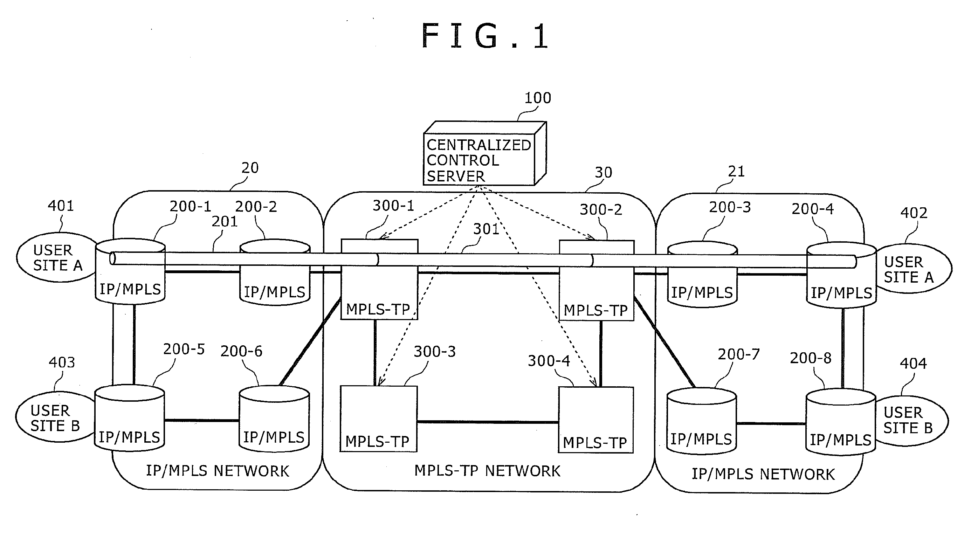

An example of the system structure for applying the present invention is shown in Fig. 1. An MPLS-TP network 30 comprised of MPLS-TP devices 300 (hereafter called transmission devices) couples (between) the IP/MPLS networks 20 and 21 comprised of IP/MPLS routers 200. A centralized control server 100 for managing and controlling the MPLS-TP devices 300 within the MPLS-TP network 30 is coupled to each of the MPLS-TP devices 300. In this network, connectivity is provided to the user terminal by mapping an IP/MPLS network 20 path and a MPLS-TP network 30 path. For example when the user terminals in the user sites A 401, A 402 are coupled to the IP-MPLS router in order to perform communication, the path 301 in the MPLS-TP network is mapped to provide a coupling to path 201 in the IP/MPLS network, and provide communication service between the user site A401 and user site A402.

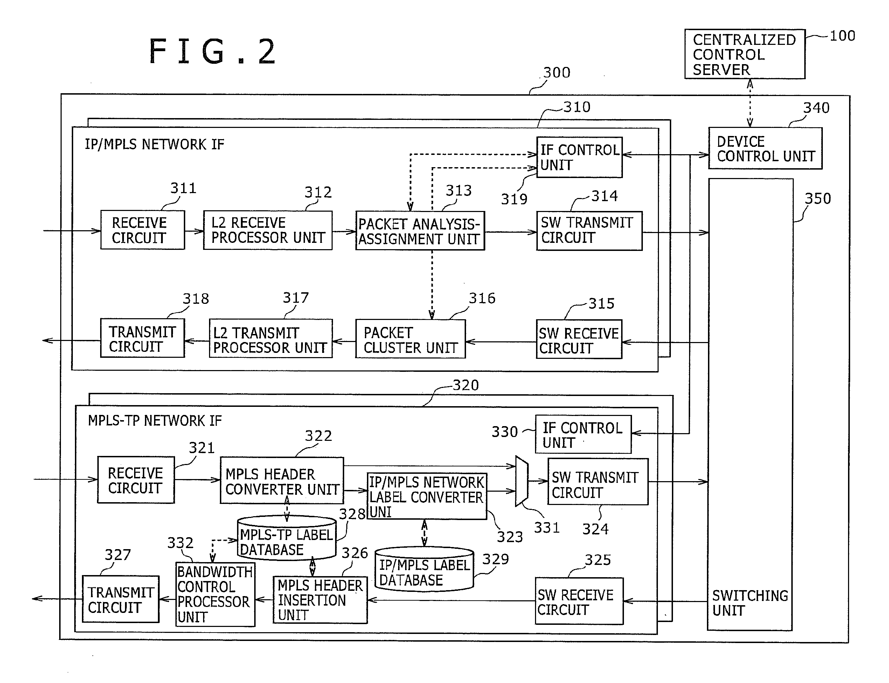

The embodiment of the present invention is hereafter described in detail. Fig. 2 is a block diagram of the transmission devices (hereafter called the edge devices) positioned at the boundary between the IP/MPLS networks 20, 21 and the MPLS-TP network 30 among the transmission devices 300 that configure the MPLS-TP network 30. The transmission device 300 positioned at the boundary between the IP/MPLS networks 20, 21 and the MPLS-TP network 30 is comprised of one or more IP/MPLS networks IF 310, one or more MPLS-TP networks IF 320, a device control unit 340, and a switching unit 350.

The device control unit 340 is coupled to the centralized control server 100, and includes a function to set the received setting information into the switching unit 350, the IP/MPLS network IF 310, and the MPLS-TP network IF 320. The device control unit 340 also includes a function to send and receive the control packets for the routing protocols for setting the paths for the IP layer of the IP/MPLS and for the signaling protocol to establish the MPLS paths, to and from the centralized control server 100.

The switching unit 350 specifies a transfer destination IF from the MPLS label and the transfer source IF of the packets, and transfers the packet to the appropriate IP/MPLS network IF 310 or MPLS-TP network IF 320.

The IP/MPLS network IF 310 is an IF coupled to the IP/MPLS router 200 and is comprised of a receive circuit 311, a L2 receive processor unit 312, a packet analysis-assignment unit 313, a SW transmit circuit 314, a SW receive circuit 315, a packet cluster unit 316, a L2 transmit processor unit 317, a transmit circuit 318, and an IF control unit 319.

The IF control unit 319 couples to the device control unit 340 and includes a function to set the setting information notified from the device control unit 340 into each structural unit of the IP/MPLS network IF 310; and a function to load (readout) information set in each structural unit and notify the device control unit 340. The IF control unit 319 also includes a function that sends and receives control packets for IP/MPLS routing protocols and for signaling protocols to and from the device control unit 340.

The receive circuit 311 is coupled to the IP/MPLS router 200 and receives packets from the IP/MPLS router 200.

The L2 receive processor unit 312 is the end point for data link layer protocols of the Open Systems Interconnection (OSI) reference model coupling between the IP/MPLS router 200 and the MPLS-TP device 300. When the data link layer protocol is for example the Ethernet, the L2 receive processor unit 312 internally executes the Ethernet frame end point processing. Moreover, the L2 receive processor unit 312 learns the transmit source MAC address of the received Ethernet frame and shares the information with the L2 transmit processor unit 317.

The packet analysis-assignment unit 313 analyzes the packet received from the L2 receive processor unit 312 and when the received packet is a data packet, transfers the received data to the SW transmit circuit 314. When the received packet is a control packet for the IP/MPLS routing protocol and signaling protocol, the packet analysis-assignment unit 313 transfers the relevant packet by way of the IF control unit 319 to the centralized control server 100.

The SW transmit circuit 314 transfers the packet received from the packet analysis-assignment unit 313 to the switching unit 350.

The SW receive circuit 315 receives the packet from the switching unit 350 and transfers the packet to the packet cluster unit 316.

After the packet cluster unit 316 receives the data packet from the SW receive circuit 315, the packet cluster unit 316 analyzes the received packet and transfers the packet to the L2 transmit processor unit 317. The packet cluster unit 316 transfers the (IP/MPLS) routing protocol control packet and signaling protocol control packet that were received from the centralized control server 100 by way of the IF control unit 319 to the L2 transmit processor unit 317.

When the packet is received, the L2 transmit processor unit 317 generates a MAC header from the MAC address information jointly shared with the L2 receive processor unit 312, attaches the MAC header to the packet, and transfers the packet to the transmit circuit 318.

The transmit circuit 318 sends the packet received from the L2 transmit processor unit 317 to the IP/MPLS router 200.

The MPLS-TP network IF 320 is an interface coupling to other MPLS-TP devices 300 configuring the MPLS-TP network 30. The MPLS-TP network IF 320 is comprised of a receive circuit 321, a MPLS header converter unit 322, an IP/MPLS network label converter unit 323, a SW transmit. circuit 324, a SW receive circuit 325, a MPLS header insertion unit 326, a transmit circuit 327, a MPLS-TP label database 328, an IP/MPLS label database 329, an IF control unit 330, a scheduler 331, and a bandwidth control processor unit 332.

The IF control unit 330 couples to the device control unit 340 and includes a function to set the setting information reported from the device control unit 340 in each structural unit of the MPLS-TP networks IF 320, and a function to load (read) the information set in each structural unit and notify the device control unit 340.

The receive circuit 321 includes a function to receive packets from the other MPLS-TP devices 300.

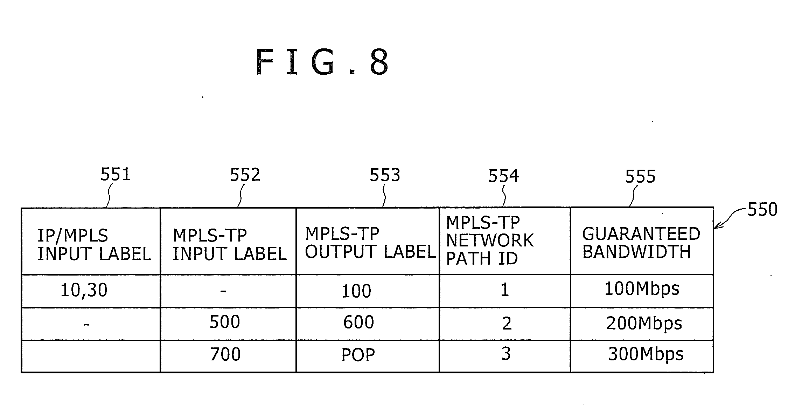

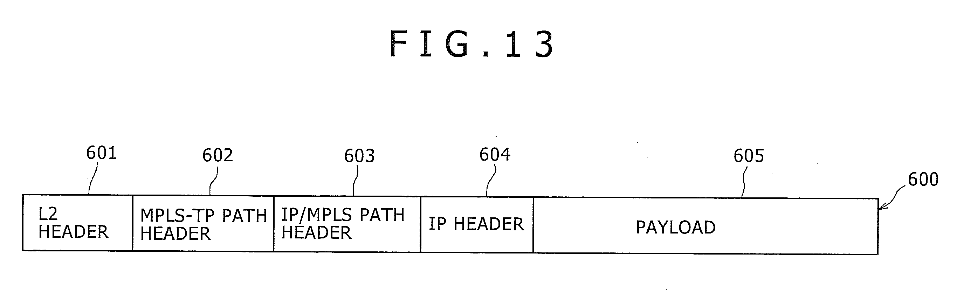

The MPLS header converter unit 322 searches the MPLS-TP label information table 550 of the MPLS-TP label database 328. The MPLS header converter unit 322 includes a function to convert the packet label. Fig. 13 is a drawing showing the structure of the data packet within the MPLS-TP network of this system. A data packet 600 is comprised of an L2 header 601 storing L2 information, a MPLS-TP path header 602 containing an MPLS-TP label, an IP/MPLS path header 603 containing an IP/MPLS label, an IP header 604 for storing the IP information, and a payload 605. Fig. 8 shows an example of information retained in the MPLS-TP label information table 550. The MPLS-TP label information table 550 is commonly shared by all of the MPLS-TP networks IF within the MPLS-TP device 300, and retains the IP/MPLS input label 551, a MPLS-TP input label 552, and a MPLS-TP output label 553 linked each other, along with the MPLS-TP network path ID 554. The MPLS header converter unit 322 searches the MPLS-TP input labels 552 of the MPLS-TP label information table 550 for a match with the MPLS-TP label attached to the beginning of the received packet. The MPLS header converter unit 322 next swaps (converts) the MPLS-TP label of the received packet for an MPLS-TP output label 553 matching the MPLS-TP input label 552 that was searched, and transfers it to the scheduler 331. If there is a pop (delete) instruction in the MPLS-TP output label 553 corresponding to the MPLS-TP input label 552, the MPLS header described in the beginning MPLS label in the packet is deleted, and the packet label is transferred to the IP/MPLS network label converter unit 323.

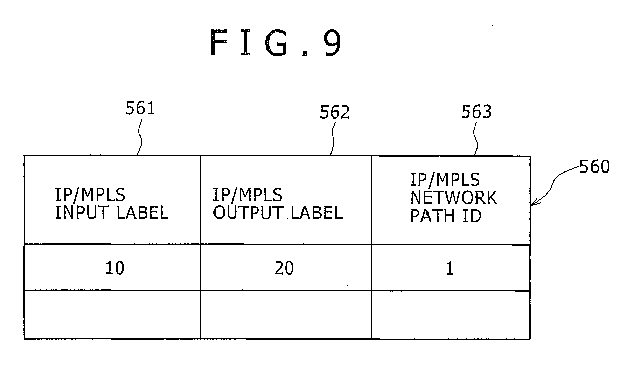

The IP/MPLS network label converter unit 323 contains a function to search the IP/MPLS label information table 560 in the IP/MPLS label database 329 and convert the IP/MPLS label of the packet. Fig. 9 shows an example of the information retained in the IP/MPLS label information table 560. The IP/MPLS label information table 560 is commonly shared by all the MPLS-TP networks IF within the MPLS-TP device 300 and retains the IP/MPLS input label 561 and IP/MPLS output label 562 that are linked each other, along with the IP/MPLS network path ID 563. The IP/MPLS network label converter unit 323 searches an IP/MPLS input label 561 of the IP/MPLS label information table 560 for a match with the IP/MPLS label attached to the beginning of the received packet. The IP/MPLS network label converter unit 323 next swaps (converts) the IP/MPLS label of the received packet for the IP/MPLS output label 562 matching the IP/MPLS input label 561 that was searched, and transfers it to the scheduler 331.

The scheduler 331 performs output arbitration of the packet received from the MPLS header converter unit 322 and the IP/MPLS network label converter unit 323 and transfers it to the SW transmit circuit 324.

The SW transmit circuit 324 transfers the packet received from the scheduler 331 to the switching unit 350.

The SW receive circuit 325 receives the packet from the switching unit 350, and transfers it to the MPLS header insertion unit 326.

The MPLS header insertion unit 326 searches the IP/MPLS input label 551 of the MPLS-TP label information table 550 for a match with the label attached to the beginning of the received packet. When an applicable entry is found, the MPLS header insertion unit 326 newly inserts a MPLS header at the beginning, records the MPLS-TP output label 553 corresponding to that header and transfers it to the transmit circuit 327. When there is no applicable entry, the received packet is transferred unchanged to the transmit circuit 327.

The bandwidth control processor unit 332 contains a function for bandwidth control processing based on the guaranteed bandwidth 555 for each path in the MPLS-TP network registered in the MPLS-TP label information table 550.

The transmit circuit 327 contains a function to send the packet received from the MPLS header insertion unit 326 to the MPLS-TP network 30 side.

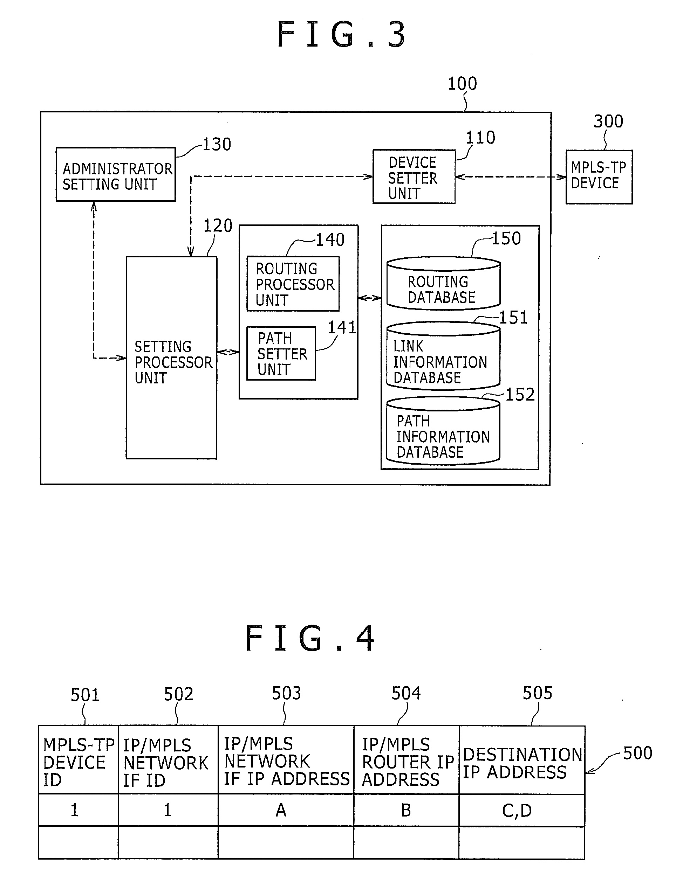

The centralized control server 100 of the present invention is described next while referring to Fig. 3. The centralized control server 100 is comprised of a device setter unit 110, a setting processor unit 120, an administrator setting unit 130, a routing processor unit 140, a path setter unit 141, a routing database 150, a link information database 151, and a path information database 152.

The device setter unit 110 is coupled to the MPLS-TP device 300 and contains a function to transfer device setting information from the setting processor unit 120, and control packets for routing protocols and signaling protocols. The device setter unit 110 also contains a function to receive control packets for IP/MPLS signaling protocols and routing protocols sent from the MPLS-TP device 300 and transfer them to the setting processor unit 120.

The administrator setting unit 130 contains a function to receive messages from external sources when the administrator makes static settings in the centralized control server 100 and send them to the setting processor unit 120.

The setting processor unit 120 contains a function to send device setting information, and control packets for routing protocols and signaling protocols to the device setter unit 110. The setting processor unit 120 also contains a function to judge the control packet received from the device setting unit 110, and select and send a suitable control packet from the routing processor unit 140 and the path setter unit 141.

The routing processor unit 140 contains a function to process the IP/MPLS routing protocol control packet that was received, and a function to generate and send a control packet for the IP/MPLS router 200. An OSPF (Open Shortest Path First) or RIP (Routing Information Protocol) and others may for example be utilized as the routing protocol. The processing of this routing protocol forms a routing information table 500 in the routing database 150.

Fig. 4 shows an example of information retained in the routing information table 500. The routing information table 500 includes a MPLS-TP device ID 501 coupling to the IP/MPLS router 200, the IP/MPLS network IF ID502 within the relevant device of the MPLS-TP device ID501, the IP/MPLS network IF IP address 503 set to couple to the IP/MPLS router 200, the IF IP address 504 for the IP/MPLS router 200 coupling to the relevant IP/MPLS network IF, and a plurality of destination IP address 505 as the destination IP address serving as the next hop for the IP/MPLS router address 504.

The path setter unit 141 includes a function to process the signaling protocol received by way of the MPLS-TP device from the IP/MPLS network 20. The LDP (Label Distribution Protocol) and the RSVP-TE (Resource Reservation Protocol-Traffic Engineering), etc. may for example be utilized as the signaling protocol. The path setter unit 141 maps the path within the MPLS-TP network 30 relative to the path in the IP/MPLS network 20 established by the signaling protocol by referring to the routing database 150, the link information database 151, and the path information database 152, and registers the path in the path information database 152. The path setter unit 141 also includes a function to send messages to operate the MPLS-TP label database 328 and IP/MPLS label database 329 of the applicable MPLS-TP device 300 according to the information in the path information database 152.

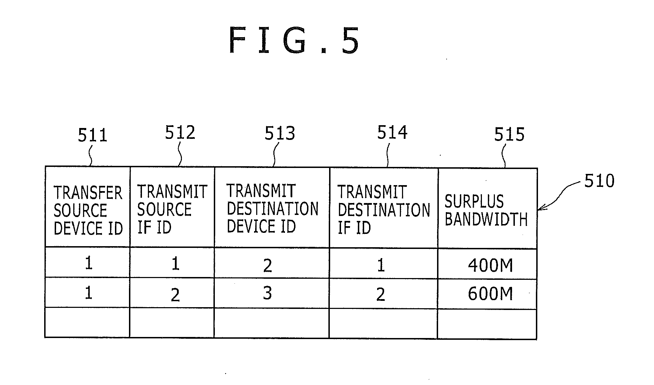

The link information database 151 includes a link information table 510. Fig. 5 shows an example of information retained in the link information table 510. The link information table 510 retains information relating to the physical link between each device within the MPLS-TP network. More specifically, the link information table 510 contains the transfer source device ID 511 for the link and transmit source IF ID512, and the transmit destination device ID 513 for the link, and the transmit destination IF ID514, and the surplus bandwidth 515 serving as the guaranteed bandwidth when setting a new path, with the applicable link. The link information database 151 allows the path setter unit 141 to know the resources, and the topology within the MPLS-TP network.

The path information database 152 contains the MPLS-TP network path information table 520 and the mapping information table 530.

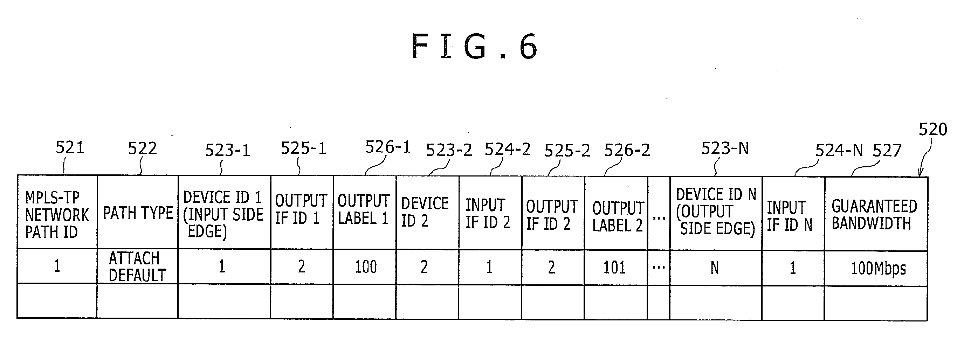

Fig. 6 shows an example of information retained in the MPLS-TP network path information table 520. The MPLS-TP network path information table 520 retains information on the paths set within he MPLS-TP network. More specifically, the MPLS-TP network path information table 520 contains the MPLS-TP network path ID521, the path type 522, the device ID 523 along the route taken by the paths, the input IF ID 524 for the relevant devices, the output IF ID525, and the output label 526 attached to the packet when the packet is output from the relevant device, and the guaranteed bandwidth 527 that the relevant path guarantees. The MPLS-TP network path ID521 is utilized in order to identify the paths. The path type 522 indicates the type of path. In the present embodiment three types of paths are defined and are the default fixed path, default variable path, and individual path. The default stationary path is a common path utilized when mapping plural paths routed among the edge devices, and the guaranteed bandwidth is fixed regardless of the network status. The default variable path is a common path the same as the default stationary path but its guaranteed bandwidth is variable according network status such as the mapping status of the individual paths as described next. The individual path is a path utilized in order to ensure the guaranteed bandwidth by one-to-one mapping of IP/MPLS network paths with a high degree of priority. The MPLS-TP network path information table 520 also always contains the input side edge device ID523 and output IF ID525, output side edge device ID523, and input IF ID524; and if there is a MPLS-TP device 300 for relay tasks, retains all the device ID523, input IF ID524, output IF ID525, and output label 526 according to the sequence of transit through the devices.

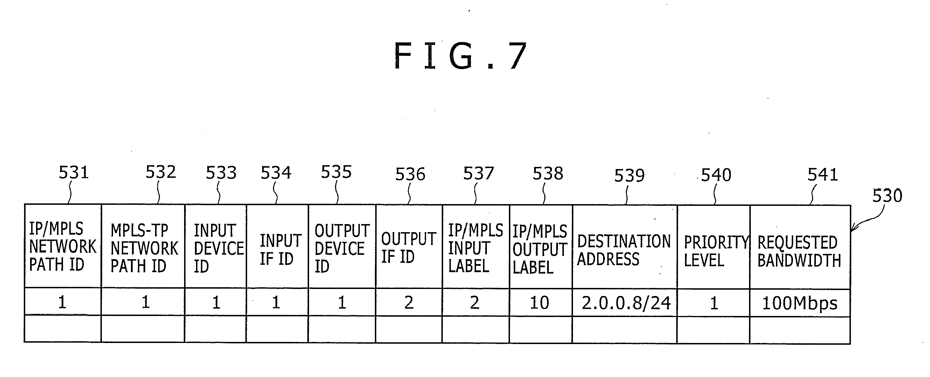

Fig. 7 shows an example of information retained in the mapping information table 530. The mapping information table 530 retains information relating to the mapping of the IP/MPLS network path and the MPLS-TP network path. More specifically, the mapping information table 530 maps and retains the IP/MPLS network path ID531; the MPLS-TP network path ID532; the ID533 for the input side MPLS-TP device 300 coupling to the IP/MPLS router 200; the ID534 for the input side IF coupling to the IP/MPLS router 200; the ID535 of the output side MPLS-TP device 300 coupling to the IP/MPLS router 200; the ID536 of the output side IF coupling to the IP/MPLS router 200; the label 537 attached to the data packet input to the MPLS-TP network from the IP/MPLS router 200; the label 538 attached to the data packet output to the IP/MPLS router 200 from the MPLS-TP network; the destination address 539 for the path in the relevant IP/MPLS network; the priority level 540; and the requested bandwidth 541.

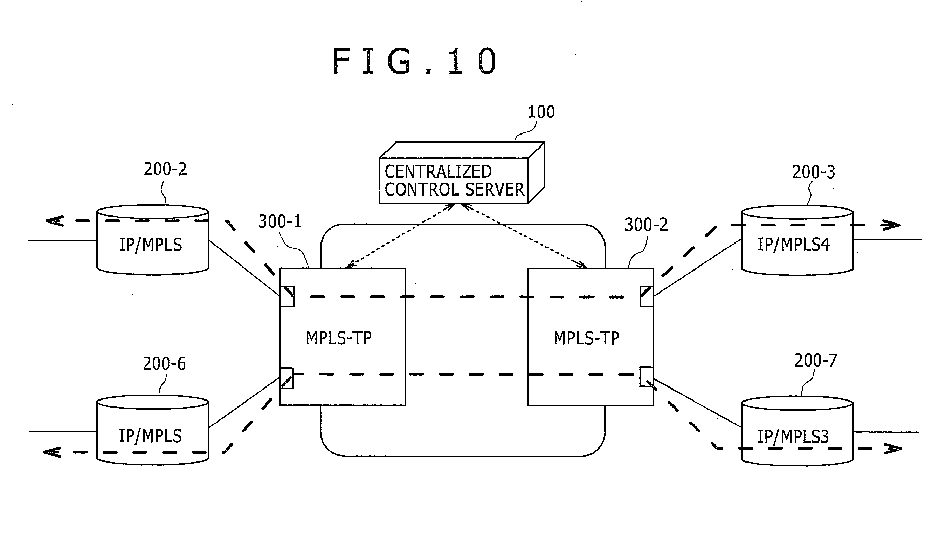

The operation of the first embodiment is described while referring to the examples. In this example of the operation as shown in Fig. 10, the paths in the MPLS-TP network for connecting between the MPLS-TP device 300-1 and 300-2 are mapped in order to provide path connectivity for setting up paths by way of the IP/MPLS routers 200-2 and 200-3, and paths by way of the IP/MPLS routers 200-6 and 200-7. In the present embodiment, LDP (Label Distribution Protocol) is utilized as the signaling protocol. The LDP is a protocol for assigning IP/MPLS labels in order to establish paths for each IP path entry. The LDP gives notification of the paths by way of label allocation messages with attached IP/MPLS labels sent from downstream IP/MPLS routers to adjacent upstream IP/MPLS routers when sending downstream. Notification of the IP/MPLS labels attached at the time when sending to the downstream side is given by way of label allocation messages from the IP/MPLS routers on the downstream side along the path to the adjacent upstream IP/MPLS routers. Here, an example of the system is described for the case when assignment of IP/MPLS labels is started by way of a label allocation message from the IP/MPLS router 200 farthest downstream on the path, and when the IP/MPLS router 200 receives a label allocation message from downstream, the IP/MPLS router 200 internally assigns the IP/MPLS labels and distributes the label allocation message upstream.

First of all, before establishing the IP/MPLS paths, the routing processor unit 140 of the centralized control server 100 sends and receives control packets for the routing protocol with the IP/MPLS router 200 by way of the MPLS-TP device 300 on the network edge and processes the control packets to generate a routing information table 500 and retains the routing information table 500 made by the routing database 150. The administrator operates the path setter unit 141 by way of the administrator setting unit 130, and registers the default paths to connect between all of the edge devices assumed to pass along when setting up paths for the IP/MPLS network, into the MPLS-TP network path information table 520 of the path information database 152. There is no priority level setting for the LDP of the signaling protocol utilized in the present embodiment so the default path types are all stationary (fixed) defaults. The path setter unit 141 registers label information regarding the default paths registered in the path information database 152 into the MPLS-TP label information table 550 of the MPLS-TP device 300 as the edge device serving as the default path start point and end point. Here, prior to the start of mapping, the entries in the MPLS-TP label information table 550 of the edge device serving as the start point of the default path is in a state where there is no IP/MPLS input label 551 matching the relevant default path; and a pop instruction is registered in the MPLS-TP output label 553 corresponding to the MPLS-TP input label 552.

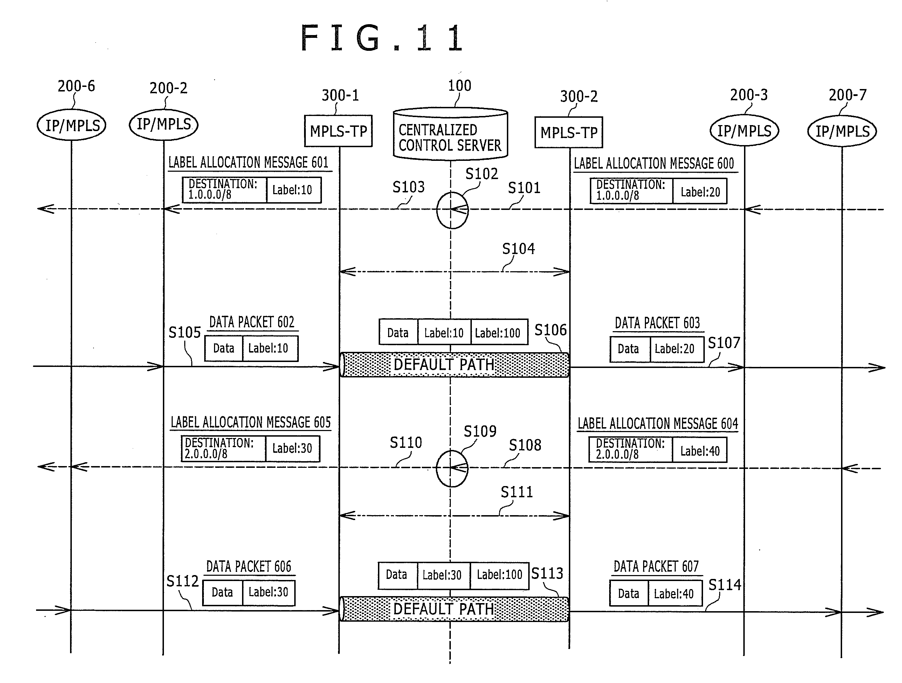

An example of the operation for mapping of paths linked to the signaling protocol is hereafter described while referring to the sequence in Fig. 11. First of all, when a label allocation message is received from the IP/MPLS router 200 downstream of the IP/MPLS network path to set up (establish), the IP/MPLS router 200-3 assigns a label internally (in this embodiment, sets the value on the assigned label to 20), and sends a label allocation message 600 to MPLS-TP network 30 side recognized as the pseudo-router. In order to utilize the path of the IP/MPLS network that was established and a destination address for the path of the IP/MPLS network that is established, the label allocation message 600 includes a label value attached when sending packages to the downstream IP/MPLS router 200-3. When the packet analysis-assignment unit 313 of the MPLS-TP device 300-2 detects a label allocation message 600, the packet analysis-assignment unit 313 transfers that label allocation message 600 to the path setter unit 141 of the centralized control server 100 (S101). The path setter unit 141 searches the routing information table 500 of the routing database 150 for the IF ID of the MPLS-TP device 300-2 that received the label allocation message 600, and the destination address recorded in the label allocation message 600, and the path setter unit 141 confirms that the IP/MPLS router 200-3 is a next hop for sending the packet to the destination address. When the IP/MPLS router 200-3 is a next hop, a label is assigned (in the present embodiment, the value of the assigned label is set to 10) to the label allocation message 600, and a label allocation message 601 is sent by way of the edge MPLS-TP device 300 to the IP/MPLS router 200 upstream on the path established in the IP/MPLS network (S102). Here, only the operation of the upstream IP/MPLS router 200-2 is described for purposes of simplicity but in fact, the message may also be issued to the IP/MPLS router 200-6. The label allocation message 601 that the centralized control server 100 sends by way of MPLS-TP device 300-1 to the IP/MPLS router 200-2 contains the label value issued by the path setter unit 141, and a destination address identical to the label allocation message 600 (S103). The path setter unit 141 adds new entries to the mapping information table 530 of the path information database 152 based on the information in the label allocation message 600 and 601. More specifically, the path setter unit 141 issues a IP/MPLS network path ID531, and registers the MPLS-TP device 300-2 ID received in label allocation message 600 into the output device ID 535, the received IF ID into the output IF ID 536, and registers the IP/MPLS output label 538 and destination address 539 by way of the information reported from the label allocation message 600. Further, the ID of the MPLS-TP device 300-1 along which the label allocation message 601 is sent, is registered in the input device ID 533, and the ID of the IF that was sent is registered in the input IF ID534. When this registration is complete, the path setter unit 141 respectively registers the IP/MPLS input label 537, IP/MPLS output label 538, and IP/MPLS network path ID531 for the MPLS-TP device 300-2 serving as the output device, into the IP/MPLS input label 561, IP/MPLS output label 562, and IP/MPLS network path ID563, as new entries for the IP/MPLS label information table 560. The path setter unit 141 next searches the MPLS-TP network path information table 520 from the input device ID533 and output device ID536 of the IP/MPLS network paths registered in the mapping information table 530, and searches the default paths connecting among the relevant MPLS-TP devices 300 and registers the relevant MPLS-TP network path ID521 into the MPLS-TP network path ID532 of the mapping information table 530. The path setter unit 141 searches the MPLS-TP label information table 550 of the MPLS-TP device 300-1 serving as the input device for the same entry as the MPLS-TP network path ID532, and adds the MPLS-TP input label 537 to the IP/MPLS input label 551 (S104). The above described operation provides connectivity for the IP/MPLS network paths mapped in the appropriate default paths of the MPLS-TP network is established. This operation example does not guarantee the bandwidth and does not specify the priority in the LDP and so does not utilize the priority level 540 and the requested bandwidth 541.

Hereafter, when the MPLS-TP device 300-1 receives the data packet 602 attached with a label 10 at the beginning from the IP/MPLS router 200-2, after a switch is made to the appropriate MPLS-TP network IF320 by the switching unit 350 based on the label, the MPLS header insertion unit 326 searches the MPLS-TP label information table 550 based on the label of the packet. The 10 here is applicable to the IP/MPLS input label 551 and so the MPLS header is added to the packet, the matching MPLS-TP output label 553 is attached, and transferred to the MPLS-TP device 300-2 by the default path (S106). The MPLS-TP device 300-2 serving as the output device searches the MPLS-TP label information table 550 based on the label of the packet in the MPLS-TP header converter unit 322 of the MPLS-TP network IF320. A pop instruction corresponding to the attached MPLS-TP input label 552 is then found so the beginning MPLS-TP header is deleted and the packet is transferred to the IP/MPLS network label converter unit 323. The IP/MPLS network label converter unit 323 searches the IP/MPLS label information table 560, and converts (swaps) the IP/MPLS input label 561 attached to the packet, for the corresponding IP/MPLS output label 562 (20), and transfers the packet from the appropriate IP/MPLS network IF to the IP/MPLS router 200-3.

The operations S108, S109, S110 when the IP/MPLS router 200-7 sends a label allocation message 604 to the MPLS-TP device 300-2, and the centralized control server 100 sends a label allocation message 605 by way of the MPLS-TP device 300-1 to the IP/MLS router 200-6, are the same as the operations S101, S102, S103. The operation in S111 is the same as in S104 but in terms of results, the entries for the MPLS-TP network path ID532, input device ID533, input IF ID534, output device ID535, and output device IF ID536 made in S104 as common entries are made in S111; and the input label (30 in the present embodiment) assigned to the IP/MPLS router 200-6 in S111 is additionally registered in the entry of the IP/MPLS input label 551 registered in S104 in the MPLS-TP label information table 550 of the MPLS-TP device 300-1. In this way, when the MPLS-TP device 300-1 has received a data packet 605 with a label 30 attached, by the adding of a MPLS header, a packet is transferred to the MPLS-TP device 300-2 on a common default path with S106 (S113), the MPLS header is deleted and the labels swapped, and the packet sent to the IP/MPLS router 200-3.

The above operation allows mapping of common default paths and transferring the packets when the edge MPLS-TP devices 300 along the route are the same on the paths of different IP/MPLS networks so that the utilization rate of the MPLS-TP network can be improved. In the case of LDP, the operation after establishing the IP/MPLS input label and output label for an optional IP/MPLS network path is the same even in the case where utilizing an assignment method different from the present embodiment, and the same effect can be obtained.

### Second Embodiment

A feature of the second embodiment is a decision to set mapping to default path or mapping to separate paths by order of priority when path mapping by utilizing RSVP-TE to establish guaranteed bandwidth paths, as a signaling protocol. In RSVP-TE, establishing of paths starts by transferring path messages including the address of the IP/MPLS router 200 farthest downstream, the requested bandwidth, the order of priority (e.g. setup priority) and so on, from the IP/MPLS router on the highest upstream path in the IP/MPLS network to the destination IP/MPLS router. The path with the procured bandwidth is next established by transferring a resource scheduling message including requested bandwidth, and IP/MPLS label attached when sending to the next hop, from the farthest downstream IP/MPLS router that received the path message, to the IP/MPLS router that is farthest upstream. The route of the IP/MPLS network path established by RSVP-TE can be clearly specified within the path message, and non-specified zones are specified in accordance with the routing table.

An example of the operation is described next. The system structure utilized is identical to that of the first embodiment and is described in the example of Fig. 10. The generating of the routing information table 500 prior to establishing the paths for the IP/MPLS network, and the registration into the MPLS-TP network path information table 520 for the default paths and the registration of the label information into the MPLS-TP label information table 550 of the relevant MPLS-TP device 300 are identical to the first embodiment. However the default stationary paths and the default variable paths may even be utilized mixed together as the default paths of the present embodiment. The default variable path is a path to change the guaranteed bandwidth according to the circumstances of the network. For example, the path setter unit 141 of the centralized control server may periodically search the link information table 510, and set the minimum value for of the surplus bandwidth for each physical link passed through by the default variable path as the guaranteed bandwidth. Hereafter, for purposes of simplicity, the following description utilizes default paths, and no distinction is made between default stationary paths and the default variable paths.

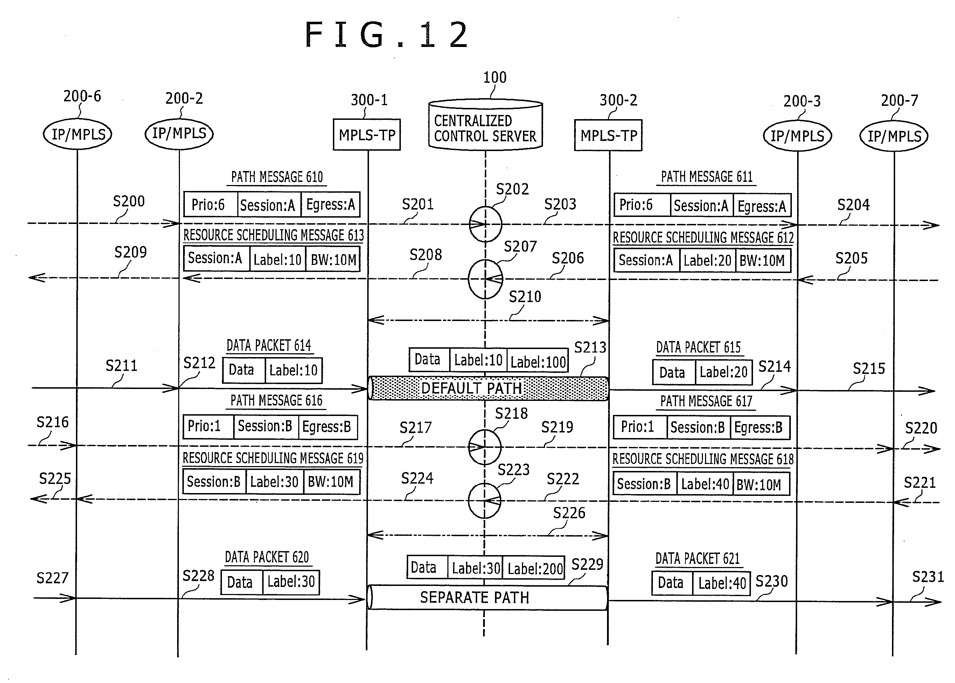

An operation example relating to consecutive path mapping with RSVP-TE is described using the sequence in Fig. 12. When the MPLS-TP device 300-1 receives the path message 610 in S200-S204, the path message is transferred to the centralized control server 100; and the path setter unit 141 acquires and retains the priority, the requested bandwidth, the destination address (destination router) and the session ID of the paths on the IP/MPLS network established by way of the path message 610; and the device ID and input IF ID and so on of the MPLS-TP device 300-1 that received the path message 610 serving as the input device for the established paths in the IP/MPLS network. The path setter unit 141 decides the order of priority at this time. The default paths are mapped at this time assuming that the path setter unit 141 has decided the low order of priority. A path message 611 is then sent by way of the MPLS-TP device 300-2 to the IP/MPLS router 200-3 of the next hop. Next in S205-S209, when the centralized control server receives a resource scheduling message 612 by way of the MPLA-TP device 300-2 from the IP/MPLS router 200-3, the path setter unit 141 acquires the session ID, the IP/MPLS output label, the requested bandwidth, and the device ID and the output IF ID and so on of the MPLS-TP device 300-2 that received the resource scheduling message 612 serving as the output device for the established path in the IP/MPLS network. The information retained when the path message 610 is received and the above acquired information is mapped based on the session ID, and new entries among the mapping information table 530 other than the MPLS-TP network path ID532 are registered. The established IP/MPLS network paths are hereafter decided by order of priority for default path mapping so that performing the setting of the MPLS-TP device 300 and the mapping to the default paths in S210 establishes connectivity by the same operation for S104 in Fig. 11 which was described as the operating example of the first embodiment. The data packets are then transferred via the default paths in S211-S215 by the same operation as in S105-S107.

When the MPLS-TP device 300-1 receives the path message 616 in S216-S220, the message is transferred to the centralized control server 100; and the path setter unit 141 acquires and retains the priority, the requested bandwidth, the destination address, and the session ID of the paths in the IP/MPLS network established by way of the path message 610, and the device ID and input IF ID and so on of the MPLS-TP device 300-1 that received the path message 616 serving as the input device for the established paths in the IP/MPLS network, the same as in the previous operation. Here, the path setter unit 141 is assumed to have decided the high order of priority. In this case, the path setter unit 141 decides that mapping can be performed on separate paths that satisfy the requested bandwidth among edge devices for passing through. For example, one or more separate paths can be statically set between the edge devices, the path setter unit 141 searches the MPLS-TP network path information table 520 and the mapping information table 530, and decides whether or not there are separate paths satisfying the requested bandwidth among the relevant edge devices. The path setter unit 141 can also search the link information table 510, set a new separate path satisfying the requested bandwidth, and decide if mapping is possible. If decided here that mapping is impossible then the following operation is not performed. If the path setter unit 141 decides that mapping is possible, the path message is sent to the IP/MPLS router 200-7 at the next hop the same as the previous operation. In S221-S225, the path setter unit 141 of the centralized control server 100 processes the resource scheduling message the same as in S205-S209, and registers the new entries in the mapping information table 530. The separate paths are next mapped rather than the default path the same operation as in S210. Here, if new separate paths were established, then the surplus bandwidth is change according to the guaranteed bandwidth for the newly established separate paths in the link information table 510. In S211-S215, the data packet 620 is transferred within the MPLS-TP network by utilizing the separate paths by the same operation as in S105-S107. The above operation handles low priority paths by mapping the common default path, and handles high priority paths by mapping separate paths in a one-to-one relation so that paths requiring the exact guaranteed bandwidth can be acquired while improving the utilization efficiency of the MPLS-TP network.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A communication system comprising:
a plurality of transmission devices (300) configuring a transmission network (30) in conformance to a first communication protocol and coupled to communication devices (200) configuring a communication network (20, 21) in conformance to a second communication protocol; and
a management server (100) coupled to the transmission devices (300),
wherein the management server (100) includes:
a first path information relating to a first communication path serving as the communication path between each of the preset transmission devices (300);
a path setter unit (141) that selects the corresponding first communication path based on the first path information relative to a second communication path established by the two communication devices (200) serving as each of the start points and end points by way of the transmission network (30), according to the transmission devices (300) configuring the transmission network (30) through which the second transmission path passes; and
a transmit unit (110) that transmits information relating to the first communication path selected by the path setter unit (141) to the transmission devices (300), and
wherein the transmission device (300) includes:
a send-receive unit (320) that receives information relating to the first communication path; and
a transfer processing unit (310) that executes transfer processing of information received from the communication device (200) based on the received information relating to the first communication path.

2. The communication system according to claim 1,
wherein the path setter unit (141) maps the common first communication path to the second communication paths passing through the common transmission devices (300), based on the first path information.

3. The communication system according to claim 1 or 2,
wherein when mapping the first communication path to the second communication path through the common transmission devices (300), the path setter unit (141) decides to execute mapping of the common first communication path or execute mapping the first communication path not utilized by other second communication paths, according to the priority set for the second communication path.

4. The communication system according to claim 3,
wherein when mapping the first communication path not utilized by other second communication paths relative to the second communication path passing through the common transmission devices (300), the path setter unit (141) selects the first communication path capable of satisfying the guaranteed communication bandwidth on the transmission network (30) for the second communication path, based on the first communication path information.

5. The communication system according to any of the preceding claims,
wherein the send-receive unit (320) includes a transmit unit to transfer control packets for setting up a communication establishing path protocol in order to establish the second communication path that the transmission device (300) received from the communication device (200), and
wherein the path setter unit (141) decides the transmission device (300) through which the second communication path passes based on the control packet, and selects the first communication path mapped to the second communication path based on the decision results and the first path information.

6. The communication system according to any of the preceding claims,
wherein the first communication protocol is a MPLS-TP (Multi-Protocol Label Switching-Transport Profile), and
wherein the second communication protocol is an IP/MPLS (Internet Protocol/Multi-Protocol Label Switching).

7. The communication system according to any of the preceding claims,
wherein the communication path protocol is a LDP (Label Distribution Protocol) or a RSVP-TE (Resource Reservation Protocol-Traffic Engineering).

8. A communication path establishing method that establishes a communication path among communication devices (200) configuring a communication network (20, 21) in conformance to a second communication protocol by way of a transmission network (30) comprising a plurality of transmission devices (300) in conformance to a first communication protocol, the communication path establishing method comprising:
setting a first communication path serving as a communication path beforehand between each of the edge devices coupling to the communication device (200) among the transmission devices (300);
selecting the mapped first communication path relative to a second communication path established by the two communication devices (200) serving as each of the start points and end points by way of the transmission network (30), according to the edge device through which the second communication path passes; and
establishing the second communication path by way of the selected first communication path.

9. The communication path establishing method according to claim 8, wherein the common first communication path is mapped relative to the second communication paths passing through the common edge devices.

10. The communication path establishing method according to claim 8 or 9, wherein mapping of the common first communication path or mapping of the first communication path not utilized by other second communication paths is decided according to the priority set for the second communication path, when mapping the first communication path relative to the second communication path passing through the common transmission devices (300).

11. The communication path establishing method according to claim 10, wherein the first communication path capable of satisfying the guaranteed communication bandwidth on the transmission network (30) for the second communication path is selected, when mapping the first communication path not utilized by other second communication paths relative to the second communication path passing through the common transmission devices (300).

12. The communication path establishing method according to any one of claims 8 to 11,
wherein the edge device that the second communication path passes through is decided based on the control packet for the communication path establishing protocol in order to establish a second communication path, and
wherein the first communication path mapped on the second communication path is selected based on the decision results.

13. The communication path establishing method according to any one of claims 8 to 12,
wherein the first communication protocol is a MPLS-TP (Multi-Protocol Label Switching-Transport Profile), and
wherein the second communication protocol is an IP/MPLS (Internet Protocol/Multi-Protocol Label Switching).

14. A management server (100) coupling to a plurality of transmission devices (300) configuring a transmission network (30) in conformance to a first communication protocol and coupled to a communication network (20, 21) in conformance to a second communication protocol, the management server (100) comprising:
a first path information relating to a first communication path serving as the communication path between each of the preset transmission devices (300);
a path setter unit (141) that selects the mapped first communication path based on the first path information, relative to a second communication path established by the two communication devices (200) serving as each of the start points and end points by way of a transmission network (30), according to the transmission devices (300) configuring the transmission network (30) that the second transmission path passes through; and
a transmit unit (110) that transmits information relating to the first communication path selected by the path setter unit (141) to the transmission devices.

15. The management server (100) according to claim 14,
wherein the path setter unit (141) maps the common first communication path based on the first path information, relative to the second communication paths passing through the common transmission devices (300).
